Europäisches Patentamt

(19) European Patent Office

Office européen des brevets

(11) Veröffentlichungsnummer: **0 154 914**
A2

(12) **EUROPÄISCHE PATENTANMELDUNG**

(21) Anmeldenummer: **85102377.0**

(22) Anmeldetag: **02.03.85**

(51) Int. Cl.⁴: **G 01 L 7/00, G 05 D 16/00**

(30) Priorität: **13.03.84 CH 1256/84**

(43) Veröffentlichungstag der Anmeldung: **18.09.85** Patentblatt 85/38

(84) Benannte Vertragsstaaten: **AT DE FR GB IT**

(71) Anmelder: **Schmid-Welti AG, Oehningerstieg 1, CH-8246 Langwiesen (CH)**

(72) Erfinder: **Schmid-Welti, Erich, Oehningerstieg 1, CH-8246 Langwiesen (CH)**

(74) Vertreter: **Blum, Rudolf Emil Ernst et al, c/o E. Blum & Co Patentanwälte Vorderberg 11, CH-8044 Zürich (CH)**

(54) **Druckmess- und Regelgerät.**

(57) Um ein kleinformatiges Gerät niedriger Bauhöhe zu erzielen, das mit zwei Druckregeleinheiten (30) zur unabhängigen Bereitstellung von zwei geregelten einstellbaren Drücken aus einem Netzdruck (N) versehen ist, sind die Druckregeleinheiten (30) je in zwei seitlich nebeneinanderliegende Funktionseinheiten aufgeteilt. Die eine Funktionseinheit wird von einer ersten Ventilkammer (22), die zweite von einer zweiten Ventilkammer (7) gebildet, deren Zusammenwirken die Regelung des Ausgangsdruckes (A) mit einem handbetätigbaren Stellglied (11) erlaubt. Die Netzdruckzuleitung (P) und die Regeldruckableitung (A) jeder Einheit (30) liegen mit den nebeneinander angeordneten Ventilkammern in Linie. Die Regeldruckableitungen (A) enden im Bereich eines Messstellenumschalters (31), mittels welchem jede der Einheiten separat mit einem Druckmesswerk (37) verbindbar ist. Ferner sind unabhängige Druckmessanschlüsse (M1, M2) vorgesehen. Die beschriebene Anordnung erlaubt eine kompakte Ausgestaltung des Gerätes in einem Block.

0154914

- 1 -

Druckmess- und Regelgerät
-----------------------------

Die Erfindung betrifft ein Druckmess- und Regelgerät mit Anschlüssen für einen Netzdruck und mindestens einen einstellbaren Regeldruck, einem Druckmesswerk sowie mindestens einer Druckregeleinheit, welche eine Netzdruckzuleitung und eine Regeldruckableitung, ein hadbetätigbares Stellglied für die Regeldruckeinstellung sowie zwei miteinander zusammenwirkende Ventilkammern aufweist, von denen die erste als Regelkammer ausgebildet und in Abhängigkeit vom Regeldruck mit der Netzdruckzuleitung oder einer Abluftöffnung verbindbar ist und die zweite als Steuerkammer mit dem Stellglied verbunden ist zur Einstellung des Regeldruckes.

Geräte dieser Art sind bekannt. Sie dienen als Druckgeber für die Entnahme von einstellbaren Referenzdrücken sowie als Druckmessgeräte für gasförmige Medien. Solche Geräte lagen bisher in Form voluminöser Messkoffer oder von Einschüben für Laborsysteme vor, jedoch nicht als Handgeräte im sog. "Multimeterformat" für den mobilen Einsatz.

Die Abmessungen bekannter Geräte waren vor allem in der Höhe durch die Ausdehnung der Druckregel-

Sb/str
27.2.1985                                          EU 1234

einheit bestimmt, deren Ventilkammern zusammen mit dem Stellglied koaxial aufgebaut waren.

Es stellt sich damit die Aufgabe, ein Druckmess- und Regelgerät der eingangs genannten Art zu schaffen, das als Handgerät mit geringen Abmessungen und insbesondere reduzierter Höhe ausgestaltet ist. Diese Aufgabe wird erfindungsgemäss dadurch gelöst, dass zur Erzielung geringer Bauhöhe die Ventilkammern der Druckregeleinheit seitlich nebeneinander angeordnet sind, wobei die Netzdruckzuleitung regelkammerseitig und die Regeldruckableitung steuerkammerseitig oder regelkammerseitig münden. Damit lassen sich auf kleinem Raum zwei Druckregeleinheiten parallel nebeneinander anordnen und unabhängig voneinander gleichzeitig zwei Referenzdrücke erzeugen, wobei jede Druckregeleinheit über den Messstellenumschalter zur Druckeinstellung und Ueberprüfung separat und ohne Beeinflussung der jeweils anderen Einheit mit dem Druckmesswandler verbunden werden kann. Die zentrale Anordnung des Messstellenumschalters zwischen den beiden Druckregelkreisen und dem Druckmesswandler führt zu einem raumsparenden Aufbau.

Nachfolgend wir ein Ausführungsbeispiel der Erfindung anhand der beiliegenden Zeichnungen näher beschrieben. Darin zeigen:

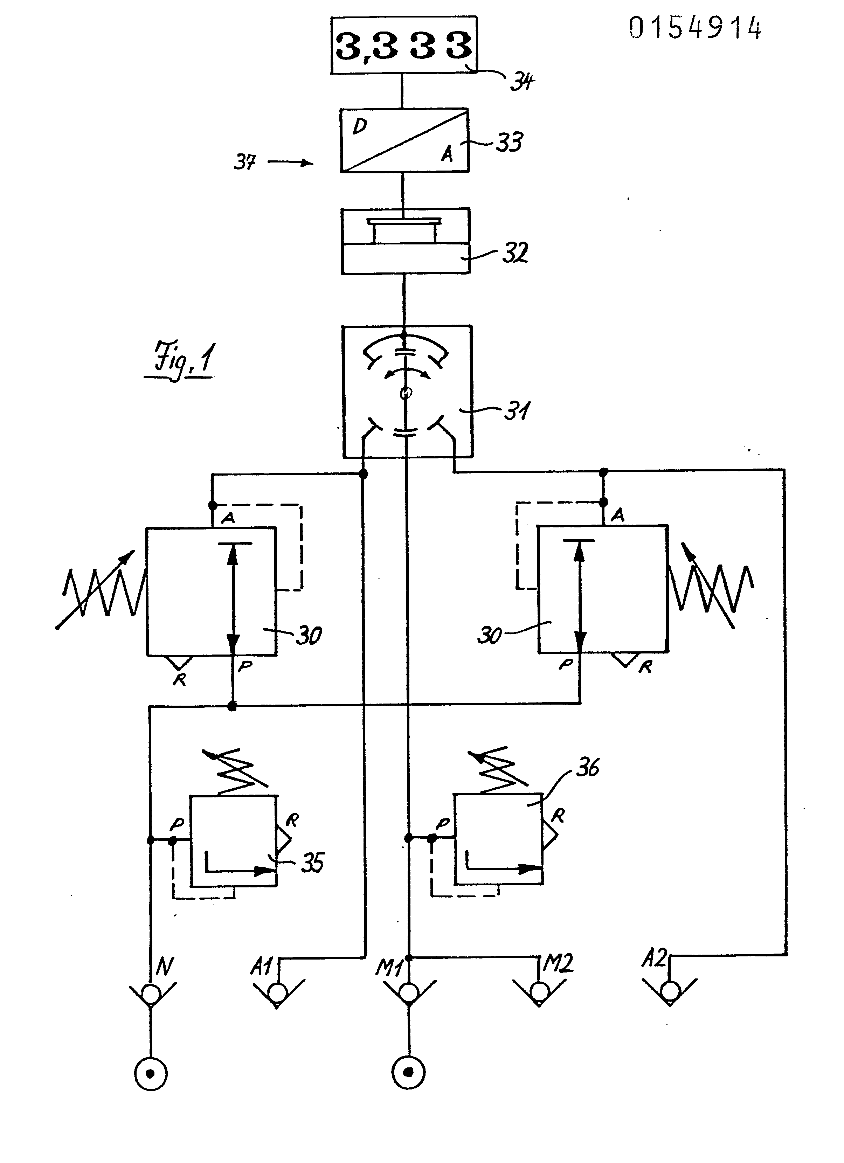

Fig. 1 den schematischen Aufbau des Gerätes;

Fig. 2 eine Aufsicht auf die Geräteoberseite mit schematisch eingezeichneten Druckkanälen;

Fig. 3 ein Funktionsschema einer Druckregeleinheit, und

Fig. 4 einen Schnitt durch die Längsachse der Druckregeleinheit nach Fig. 3.

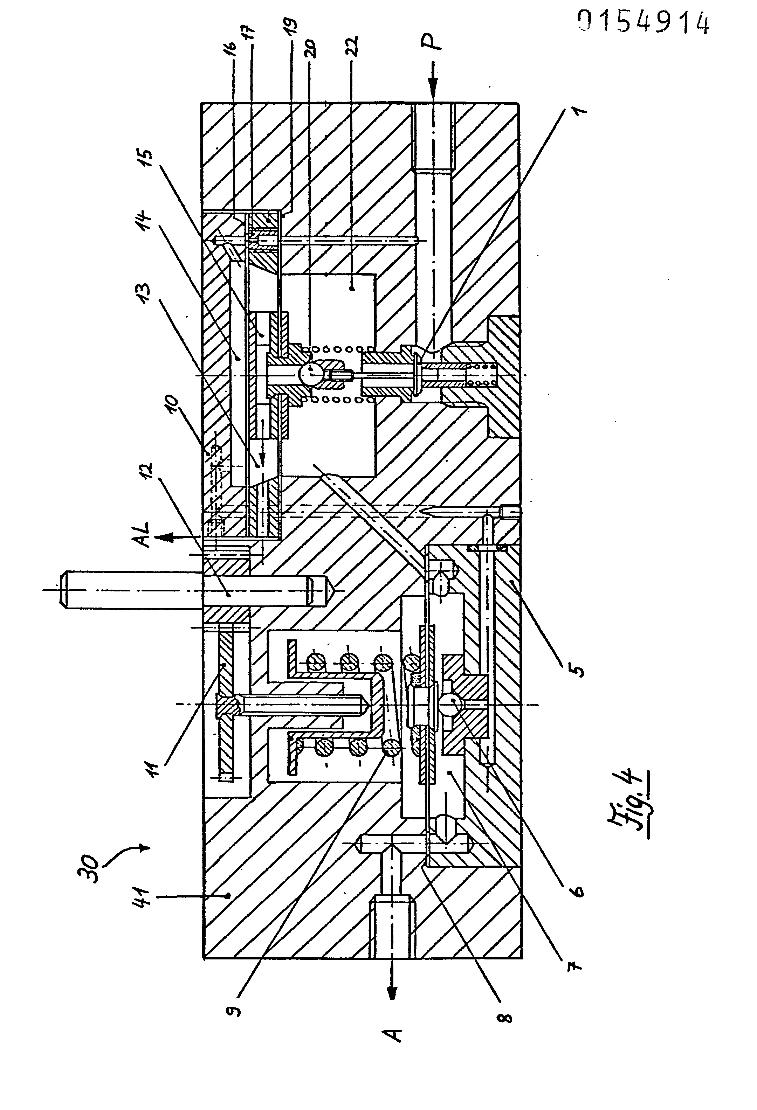

Zunächst sei anhand der ersten Figur der grundsätzliche Aufbau des Druckmess- und Regelgerätes beschrieben. Es weist einen Netzdruckanschluss N zur Versorgung des Gerätes mit einem Netzdruck auf, dessen Höhe nicht stabilisiert zu sein braucht, jedoch über den einstellbaren Regeldrücken liegt. Am Netzdruckeingang ist ein erstes Sicherheitsventil 35 angeordnet, dessen Schwellwert einstellbar ist. Der Netzdruckanschluss N ist mit zwei parallel zueinander angeordneten Druckregeleinheiten 30 verbunden, die grundsätzlich gleich aufgebaut sind, jedoch zur Einstellung unterschiedlicher Druckbereiche ausgebildet sein können. Die Druckregeleinheiten 30 gestatten die manuelle Einstellung eines wählbaren Druckes im entsprechenden Druckbereich. Dieser Regeldruck hängt im wesentlichen nur von der gewählten Einstellung der Druckregeleinheit ab, deren Aufbau nachfolgend anhand der Fig. 3 und 4 detailliert erläutert wird. Die Regeldruckableitungen A der Druckregeleinheiten 30 sind einerseits mit einem zentralen Messstellenumschalter 31 und andererseits mit Anschlüssen A1 bzw. A2 für die Druckentnahme verbunden. Der Messstellenumschalter 31 verbindet die Regeldruckableitung bzw. zwei Messanschlüsse M1 und M2 wahlweise mit einem Druckmesswerk 37, das einen Druckumsetzer 32 besitzt, dessen Signale in einem Analog-Digitalwandler 33 zu digitalen Werten gewandelt werden und auf der Digitalanzeige 34 erscheinen. Je nach Stellung des Messstellenumschalters 31 wird der an einem der Anschlüsse A1 oder A2 herrschende Regeldruck angezeigt, was die exakte manuelle Einstellung jeder der Druckregeleinheiten 30 auf den gewünschten Druckwert gestattet. In einer dritten Stellung des Umschalters 31 ist das Druckmesswerk 37 direkt mit den Messanschlüssen M1 und M2 verbunden. Damit kann einerseits das Druckmesswerk 37 geeicht werden und andererseits können unabhängig von der beschriebenen Druckregelung die Drücke weiterer Druckquellen gemessen werden. Im beschriebenen Druckmesskreis ist ebenfalls ein Sicherheitsventil 36 vorgesehen.

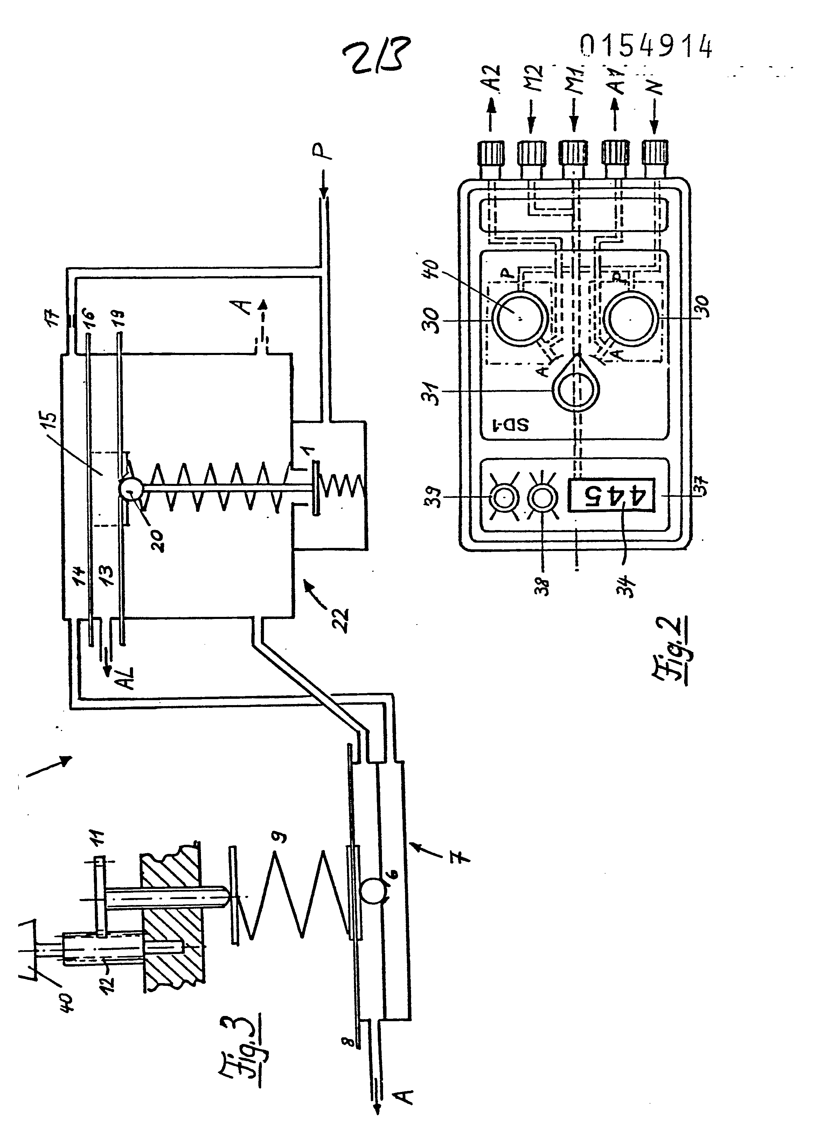

In Fig. 2 ist der umschriebene Aufbau des Gerätes in schematischer Aufsicht auf eine konkrete Geräteausführung ersichtlich. Das Gerät ist im wesentlichen quaderförmig in der Art bekannter Elektro-Multimeter aufgebaut. Die Anschlüsse N, A1, A2, M1, M2 liegen nebeneinander an der unteren Schmalseite des Gerätes und sind mittels der schematisch eingezeichneten Kanäle mit den vorerwähnten Bauteilen verbunden. Jede der beiden Druckregeleinheiten 30 besitzt einen Drehknopf 40 als Einstellorgan, die auf der Gehäuseoberseite angeordnet sind. Der obere Geräteteil ist zur Aufnahme des als Einheit ausgebildeten Druckmesswerkes 37 ausgestaltet. Es weist insbesondere eine digitale Anzeige 34, einen Einheitenumschalter 38 zur Aenderung der Ableseempfindlichkeit und einen Funktionsschalter 39 zum Ein- und Ausschalten des Gerätes für die Batterieprüfung etc. auf.

Das Druckmesswerk 37 ist als Einheit ein- und ausbaubar. Das in Fig. 2 gezeigte Gerät weist eine geringe Bauhöhe auf, entsprechend dem erwähnten Multimeterformat. Diese Bauhöhe ist im wesentlichen durch die Ausgestaltung der Druckregeleinheiten 30 bestimmt, welche nun anhand der Fig. 3 und 3 näher erläutert werden soll. Zunächst wird anhand der Fig. 3 das grundsätzlich vorbekannte Funktionsprinzip kurz erläutert. Es sind im wesentlichen zwei Ventilkammern 7,22 vorgesehen mit insgesamt drei Ventilen 1,20 und 6. Die erste Ventilkammer 22 weist ein Einlassventil 1 und ein Entlüftungsventil 20 auf, die zweite Ventilkammer 7 ein einstellbares Druckausgleichventil 6. Im Nullzustand, d.h. ohne Druckluft, ist das Einlassventil 1 und das Druckausgleichsventil 6 geschlossen und das Entlüftungsventil 20 ist offen.

0154914

Der Anschluss N des Reglers wird nun am Druckluftnetz angeschlossen. Der Netzdruck N liegt einerseits am Einlassventil 1 und gelangt andererseits verlangsamt über eine Einlassdüse 17 in die Eingangsdruckkammer 14, baut sich dort auf und drückt eine erste Regelkammermembrane 19 und eine zweite Regelkammermembrane 16 nach unten. Die Membranen sind über einen Stützring 15 mechanisch miteinander gekoppelt. Dadurch schliesst das Entlüftungsventil 20, und das Einlassventil 1 wird geöffent. Die Luft strömt in die erste Ventilkammer 22, die sog. Regelkammer, und von dort über eine Verbindungsleitung in die zweite Ventilkammer 7, die sog. Steuerkammer. Sobald die mit einer Druck-Regulierfeder 9 eingestellte Kraft durch den Gegendruck in der Steuerkammer 7 erreicht ist, öffnet eine Steuerkammermembrane 8 das Druckausgleichsventil 6, und es findet zwischen der Eingangsdruckkammer 14 und den beiden Ventilkammern 22,7 ein Druckausgleich statt, d.h. die Membranen 19,16 gehen nach oben, das Einlassventil 1 wird geschlossen, und das Entlüftungsventil 20 wird geöffnet, d.h. der Druck in der Regelkammer baut sich durch einen Auslass AL solange nach aussen ab, bis das Druckausgleichsventil 6 über die Druckregulierfeder 9 wieder geschlossen ist. Das Eingangsventil 1 wird jetzt wieder geöffnet, usw.

Der mittels dem Drehknopf 40 eingestellte, stabilisierte Druck A wird der ersten über die zweite Ventilkammer 7 entnommen.

Die geringe Bauhöhe der Druckregeleinheit 30 ergibt sich, wie schon aus Fig. 3, aber insbesondere aus Fig. 4 ersichtlich ist, aus der seitlichen Anordnung der Ventilkammern 22 und 7 und den dadurch vereinfachten Zuleitungs- und Ableitungsverhältnissen, wobei die Netzdruckzuleitung P auf der Seite der Regelkammer 22 und die Regeldruckableitung A auf der

- 6 -

0154914

Seite der Steuerkammer 7 mündet. Damit wird eine gewissermassen lineare Anordnung der Druckregeleinheiten 30 erzielt. Um die Länge ebenfalls zu reduzieren, sind die Regelmembranen 16,19 einerseits und die Steuermembrane 8 andererseits in versetzten Parallelebenen nebeneinander angeordnet. Dabei sind die Steuerkammer-Membranen 8 gegen die Gehäuseunterseite und die Regelkammermembranen 16,19 gegen die Gehäuseoberseite hin versetzt. Die entsprechenden Ventilkammern 7, 22 sind je von den betreffenden Gehäuseseiten her über Ventilkammerdeckel 5 bzw. 10 zugänglich (Fig. 4). Dieser Aufbau gestattet es, das Gehäuse 41 als massiven Block auszubilden, in welchem entsprechende Oeffnungen und Bohrungen vorgesehen sind. Vorzugsweise besteht der Block aus Aluminium.

Die Druckvorwahl der Druckregeleinheiten 30 erfolgt, wie bereits ausgeführt, mittels eines Drehknopfes 40. Als Stellglied ist dabei eine axial verstellbare Spannschraube 11 vorgesehen, mittels welcher die Federvorspannung der Druckregulierfeder 9, welche über die Membran 8 auf das Ventil 6 wirkt, einstellbar ist. Der Drehknopf sitzt auf einer axial unverschieblichen Welle 12, die im Gehäuse 41 im Bereich zwischen den beiden Ventilkammern drehbar gelagert ist. Die Welle 12 ist dabei nicht koaxial zur Spannschraube 11 angeordnet, sondern über ein Ritzel mit einem Zahnrad an der Spannschraube 11 antriebsverbunden. Die damit bewirkte Untersetzung erlaubt ein präzises Feineinstellen jeder Druckregeleinheit 30 und die Anordnung hat den Vorteil, dass der aussenliegende Drehknopf 40 beim Verstellen in seiner Längsachse nicht verschoben wird. Damit wirkt sich der Hub der Spannschraube 11, welcher zur Erzielung eines grossen Regelbereiches möglichst gross ein soll, nicht auf die gewünschte, niedrige Bauhöhe des Gerätes

0154914

aus. Die für die beiden Regeleinheiten 30 allenfalls gewünschten unterschiedlichen Druckbereiche lassen sich durch entsprechende Wahl der Druckregulierfeder 9 erzielen.

Das beschriebene Druckmess- und Regelgerät weist den Vorteil geringer Bauhöhe auf durch die Aufteilung jeder Druckregeleinheit 30 in zwei nebeneinanderliegende Funktionseinheiten. Die Druckeinstellung erfolgt über eine Zahnraduntersetzung, so dass einerseits die Drehknöpfe 40 axial fest bleiben und damit die Bauhöhe nicht beeinflussen und andererseits eine feinfühlige Einstellung möglich wird.

Die kompakte Bauweise, welche zwei parallel liegende Druckregeleinheiten 30, einen pneumatischen Messstellenumschalter 31, zwei Sicherheitsventile 35,36 und ein elektronisches Druckmesswerk 37 in einem Block vereint, ergibt geringe Baumasse des Gerätes.

Patentansprüche
--------------------------------

1. Druckmess- und Regelgerät mit Anschlüssen (N,A1,A2) für einen Netzdruck und mindestens einen einstellbaren Regeldruck, einem Druckmesswerk (37) sowie mindestens einer Druckregeleinheit (30), welche eine Netzdruckzuleitung (P) und eine Regeldruckableitung (A), ein handbetätigbares Stellglied (11) für die Regeldruckeinstellung sowie zwei miteinander zusammenwirkende Ventilkammern (22,7) aufweist, von denen die erste als Regelkammer (22) ausgebildet und in Abhängigkeit vom Regeldruck mit der Netzdruckzuleitung (P) oder einer Abluftöffnung (AL) verbindbar ist und die zweite als Steuerkammer (7) mit dem Stellglied (11) verbunden ist zur Einstellung des Regeldruckes, dadurch gekennzeichnet, dass zur Erzielung geringer Bauhöhe die Ventilkammern (22,7) der Druckregeleinheit seitlich nebeneinander angeordnet sind, wobei die Netzdruckzuleitung (P) regelkammerseitig und die Regeldruckableitung (A) steuerkammerseitig oder regelkammerseitig münden.

2. Druckmess- und Regelgerät nach Anspruch 1, wobei die Regelkammer (22) und die Steuerkammer (7) je mindestens eine druckbeaufschlagbare Membran (16,19;8) zur Betätigung des jeweiligen Ventils (20;6) aufweisen, dadurch gekennzeichnet, dass die Membranen in zueinander versetzten Parallelebenen nebeneinander angeordnet sind.

3. Druckmess- und Regelgerät nach Anspruch 2, mit einem im wesentlichen quaderförmigen Gehäuse, wobei die Membranen (16,19;8) parallel zur Gehäuseebene angeordnet sind und an der Gehäuseoberseite eine Betätigungsvorrichtung (40) für das Stellglied vorge-

- 2 -

0154914

sehen ist, dadurch gekennzeichnet, dass die Steuerkammermembranen (16,19) gegen die Gehäuseoberseite versetzt und von der entsprechenden Seite montierbar sind.

4. Druckmess- und Regelgerät nach einem der vorangehenden Ansprüche, mit einem im wesentlichen quaderförmigen Gehäuse, wobei die Ventilkammern (22,7) in der Gehäuseebene seitlich zueinander angeordnet sind, und dass Stellglied eine axial verstellbare Spannschraube (11) aufweist zur Beaufschlagung der mit dem entsprechenden Ventil zusammenwirkenden Steuerkammermembran (8), dadurch gekennzeichnet, dass zur Betätigung des Stellgliedes an der Gehäuseoberseite ein Drehknopf (12,40) achsparallel und axial unverschieblich neben der Spannschraubenachse angeordnet ist und über ein Untersetzungsgetriebe mit derselben antriebsverbunden ist.

5. Druckmess- und Regelgerät nach einem der vorangehenden Ansprüche, mit einem im wesentlichen quaderförmigen Gehäuse, dadurch gekennzeichnet, dass zwei unabhängig voneinander arbeitende Druckregeleinheiten (30) vorgesehen sind, die in der Gehäuseebene nebeneinander angeordnet sind, derart, dass ihre Netzsdruckzuleitungen (P) dem mit den Anschlüssen versehenen Geräteende und ihre Regeldruckableitungen (A) einem zentralen Messstellenumschalter (31) zugewandt sind, mittels welchem jede der Druckregeleinheiten an das Druckmesswerk (37) anschliessbar ist.

6. Druckmess- und Regelgerät nach Anspruch 5, dadurch gekennzeichnet, dass für beide Druckregeleinheiten ein gemeinsamer Netzdruckanschluss (N) mit einem Sicherheitsventil (35) und für jede Druckregeleinheit (30) ein separater Regeldruckanschluss (A1,A2) vorgesehen ist.

7. Druckmess- und Regelgerät nach einem der Ansprüche 5 und 6, dadurch gekennzeichnet, dass der Messstellenumschalter (31) eine Stellung zum direkten Anschliessen mindestens eines Druckmessanschlusses (M1,M2) an das Druckmesswerk (37) aufweist, wobei der Druckmessanschluss mit einem Sicherheitsventil (36) versehen ist.

8. Druckmess- und Regelgerät nach einem der Ansprüche 5 bis 7, dadurch gekennzeichnet, dass die Druckregeleinheiten (30) zur Einstellung nicht identischer, aneinandergrenzender Druckbereiche ausgestaltet sind.

9. Druckmess- und Regelgerät nach einem der vorangehenden Ansprüche, dadurch gekennzeichnet, dass das Druckmesswerk (37) mit der Anzeige (34) als austauschbare Einheit ausgebildet und in dem den Druckanschlüssen entgegengesetzten Gerätebereich angeordnet ist.

10. Druckmess- und Regelgerät nach einem der vorangehenden Ansprüche, mit einem im wesentlichen quaderförmigen Gehäuse, dadurch gekennzeichnet, dass das Gehäuse aus einem massiven, quaderförmigen Block besteht, wobei die Ventilkammern und deren Druckanschlüsse bzw. -verbindungen als Ausnehmungen in diesem Block ausgebildet sind.

0154914

3,3 3 3 — 34

Fig. 1

Fig. 3

Fig. 2

SD-1

445

→ A2

← M2

← M1

→ A1

← N

0154914

Fig. 4